# EUROPÄISCHE PATENTSCHRIFT

(11) **EP 1 010 971 B1**
(45) Veröffentlichungstag und Bekanntmachung des Hinweises auf die Patenterteilung: **27.07.2011**
(21) Anmeldenummer: 99124417.9
(22) Anmeldetag: 07.12.1999
(51) Int. Cl.: G01F 23/68, G01F 23/70

(54) **Behälter mit einer Vorrichtung zum Erfassen des Flüssigkeitsstandes in dem Behälter**
Container with a device for measuring the liquid level in the container
Réservoir avec un dispositif pour la mesure de niveau d'un liquide dans le réservoir

(30) Priorität: 15.12.1998 DE 19857845
(43) Veröffentlichungstag der Anmeldung: 21.06.2000
(73) Patentinhaber: BSH Bosch und Siemens Hausgeräte GmbH, 81739 München (DE)
(72) Erfinder: Klose, Heinz, Prof. Dr., 26125 Oldenburg (DE)

(56) Entgegenhaltungen:
- CH-A- 395 567
- DE-A- 19 608 866
- DE-U- 9 314 988
- US-A- 5 585 786
- PATENT ABSTRACTS OF JAPAN vol. 008, no. 183 (P-296), 23. August 1984 (1984-08-23) & JP 59 073730 A (MATSUSHITA DENKI SANGYO KK), 26. April 1984 (1984-04-26)

## Beschreibung

Die vorliegende Erfindung betrifft einen Behälter mit einer Vorrichtung zum Erfassen des Flüssigkeitsstandes in dem Behälter mit den Merkmalen des Oberbegriffs des Anspruchs 1.

In einer Waschmaschine oder Geschirrspülmaschine werden die zu reinigenden Güter wie Textilien oder Geschirr und Töpfe mit Wasser benetzt. Um eine optimale Wasch- bzw. Reinigungsleistung zu erhalten wird dieses Wasser mit Waschmittel bzw. Spülmittel versetzt und auf entsprechende Temperaturen erhitzt. Um dem gerade in den letzten Jahren stark gestiegenen Umweltbewußtsein sowohl der Hersteller als auch der Kunden gerecht zu werden, müssen moderne Haushaltgeräte wie Waschmaschine oder Geschirrspüler die maximale Wasch- und Reinigungsleistung bei minimalem Wasser-, Waschmittel- und Energieverbrauch erbringen. Die exakte elektronische Steuerung der Wasch- und Reinigungsprozesse in solchen modernen Haushaltgeräten erfordert eine möglichst exakte Bestimmung des Flüssigkeitsstandes im Haushaltgerät. Nur so kann dauerhaft ein möglichst geringer Rohstoffverbrauch sichergestellt werden.

So sind, z. B., Vorrichtungen zur Bestimmung der Füllstandshöhe in Haushaltgeräten bekannt, die Drucksensoren verwenden. Bei diesem Prinzip bringt eine Wassersäule, die in einem luftdichten System einen vom Wasserstand im Haushaltgerät abhängigen Druck aufbaut, eine Membran zur Verformung. Diese druckbedingte Membranverformung wird anschließend beispielsweise in elektrische Signale umgesetzt, die der jeweiligen Höhe der Wassersäule entsprechen.

Außerdem sind Systeme bekannt, die eine durch Druck verformbare Membran verwenden, die selbst elektrisch aktiv ist und die gemessenen Druckwerte als Spannungswerte weitergibt. Diese bekannten Systeme weisen den Nachteil auf, daß sie die Füllstandshöhe in einem Haushaltgerät nicht exakt bestimmen können, wodurch beim Wasch- und Reinigungsprozeß unnötig Energie und Wasser verbraucht werden.

Um diese Nachteile zu überwinden, wurden Meßvorrichtungen entwickelt, die den Flüssigkeitsstand in einem Behälter über eine Leitungsanordnung, nach dem Prinzip der kommunizierenden Röhren, ermitteln. Eine solche, nach dem Prinzip der kommunizierenden Röhren arbeitetende Meßvorrichtung ist beispielsweise aus der DE 196 08 866 A1 bekannt. Die bekannte Meßvorrichtung weist dabei ein Meßgerät mit einem Schwimmer auf, wobei zur Erfassung der Höhenposition des Schwimmers eine Lichtschranke vorgesehen ist.

Diese bekannte Meßvorrichtung weist den Nachteil auf, daß die Lichtschranke die exakte Füllstandshöhe in der Meßeinrichtung nicht ermitteln kann, da die in den Waschflüssigkeiten der Haushaltgeräte enthaltenen Wasch- oder Spülmittel zu einer Schaumbildung führen können, die die Funktion der Lichtschranke extrem beeinträchtigen.

Eine weitere Vorrichtung zum Erfassen eines Flüssigkeitsstandes in einem Behälter ist aus DE 93 14 988 U1 bekannt. Bei einer solchen Vorrichtung sind mindestens zwei Lichtquellen in definierten Höhen an einem Füllstandsmeßbehälter angeordnet. Innerhalb des Füllstandsmessbehälter ist ein auf der Flüssigkeit aufschwimmender Schwimmer angeordnet, welcher das Licht der Lichtquellen in Richtung des Bodens des Füllstandsmessbehälters reflektiert. Das reflektierte Licht wird mittels eines am Boden angeordneten Detektors erfasst.

Ferner offenbart US 5,743,135 eine weitere Vorrichtung zum Erfassen eines Flüssigkeitsstandes. Die Vorrichtung weist unter anderem einen Schwimmer, eine Lichtquelle mit mehreren LED und eine Mehrzahl optoelektronische Empfangseinrichtungen auf, wobei die Empfangseinrichtungen mit einem jeweils voneinander konstanten Höhenabstand angeordnet sind. Die Höhe des Schwimmers ist bei dieser Vorrichtung eineinhalbfach so hoch wie der konstante Höhenabstand der Empfangseinrichtungen.

Der vorliegenden Erfindung liegt deshalb die Aufgabe zugrunde, einen Behälter mit einer Vorrichtung zum Erfassen des Flüssigkeitsstandes in dem Behälter vorzuschlagen, durch welche die Höhe des Flüssigkeitsstandes mit minimalem apparatetechnischen Aufwand sehr exakt bestimmt werden kann und auch bei längerem Gebrauch eine verringerte Funktions- bzw. Meßleistung der Lichtschrankenanordnungen vermieden wird.

Diese Aufgabe wird durch den Behälter mit den Merkmalen des Anspruchs 1 gelöst.

Gemäß der Erfindung weist der Schwimmer einen oberen und einen unteren Abschnitt auf, wobei diese beiden Abschnitte durch wenigstens einen Abstandshalter miteinander verbunden sind, wobei der obere Abschnitt in der Lage ist Lichtstrahlen zu unterbrechen und im Bereich des Abstandshalters von der Lichtschrankenanordnung (7) ausgesendetes Licht durchtreten kann. Die Höhe des oberen Schwimmerabschnitts entspricht etwa dem eineinhalbfachen Höhenabstand der Lichtschrankenanordnungen entspricht. Durch den zweiteiligen Schwimmer wird insbesondere gewährleistet, daß keine verschmutzte Waschflüssigkeit, die zudem noch im Wasser gelösten Kalk enthält, die Funktion der Lichtschrankenanordnungen beeinträchtigt. Hierdurch wird auch bei längerem Gebrauch eine verringerte Funktions- bzw. Meßleistung der Lichtschrankenanordnungen vermieden.

Ferner sind die Lichtschrankenanordnungen oberhalb der maximal erreichbaren Höhe des unteren Schwimmerabschnittes vorgesehen. Hierdurch wird verhindert, daß Schmutzwasser in den Meßbereich eindringt, das die Meßergebnisse unpräzise werden ließe. Dabei ist die maximal erreichbare Höhe des unteren Schwimmerabschnittes durch den maximalen Flüssigkeitsstand innerhalb des Meßsystems bedingt.

Durch die erfindungsgemäße Vorrichtung zum Erfassen des Flüssigkeitsstandes wird eine sehr exakte Bestimmung des Flüssigkeitsstandes in dem Behälter ermöglicht, die nicht durch Schaumbildung der verwendeten Reinigungsflüssigkeit oder Schmutzpartikel, die in der Reinigungsflüssigkeit enthalten sind, beeinträchtigt wird.

Vorteilhafterweise weisen die optoelektronischen Einrichtungen, die als Lichtschrankenanordnungen ausgebildet sind, gepulste Injektionslumineszenzdioden auf. Diese Injektionslumineszenzdioden senden elektronische Signale aus, die auf einfache Weise von der Steuereinrichtung des Haushaltgerätes verrechnet werden können. In einer besonders bevorzugten Ausführungsform werden zwei oder mehr elektronische Injektionslumineszenzdioden mit verschiedenen Wellenlängen (λ1 = 2λ2) verwendet. Diese unterschiedlichen Wellenlängen erlauben die Errechnung der Höhe des Flüssigkeitsschaumes im bezug zur Schwimmerhöhe.

Weiterhin ist die Lichtschrankenanordnung vorteilhafterweise als Durchlicht-Lichtschrankenanordnung ausgebildet, wodurch die Lichtschrankenanordnung sehr kostengünstig gebaut werden kann.

Ebenso vorteilhafterweise kann die Lichtschrankenanordnung als Reflex-Lichtschrankenanordnung ausgebildet sein, die es erlaubt, nur eine Anordnung auf einer Seite vorzusehen, die gleichzeitig Sender und Empfänger des Lichtsignals ist.

In einer bevorzugten Ausführungsform ist eine Einrichtung zur Reflexion der Lichtstrahlen direkt am Schwimmer ausgebildet. Dies weist den besonderen Vorteil auf, daß die Lichtstrahlen vor der Reflexion nicht zuerst durch die Flüssigkeitssäule im Meßgerät hindurchtreten müssen, sondern unmittelbar am Schwimmer reflektiert und direkt vom Empfänger aufgenommen werden können. Vorteilhafterweise ist der Schwimmer innerhalb des Meßgeräts aus einem wärmeunempfindlichen Material ausgebildet, wodurch eine durch höhere Waschflüssigkeitstemperatur bedingte Ausdehnung und eine durch niedrigere Temperatur bedingte Zusammenziehung des Schwimmers vermieden wird. Dadurch wird gewährleistet, daß der Schwimmer unabhängig von der Temperatur der Waschflüssigkeit immer optimal in dem Meßrohr bewegt werden kann.

Ist der Schwimmer als Hohlzylinder ausgebildet, erlaubt dies eine besonders leichte Bauweise des Schwimmers. Darüber hinaus kann der Schwimmer eine Beschichtung mit reflektierendem Material an seiner Seitenwand aufweisen.

Weiterhin kann in einer besonders bevorzugten Ausführungsform der wenigstens eine Abstandshalter zwischen den beiden Schwimmerabschnitten aus einem transparenten Material ausgebildet sein, so daß Lichtstrahlen vom Lichtsender durch den Abstandshalter hindurchtreten und vom Lichtempfänger aufgenommen werden können.

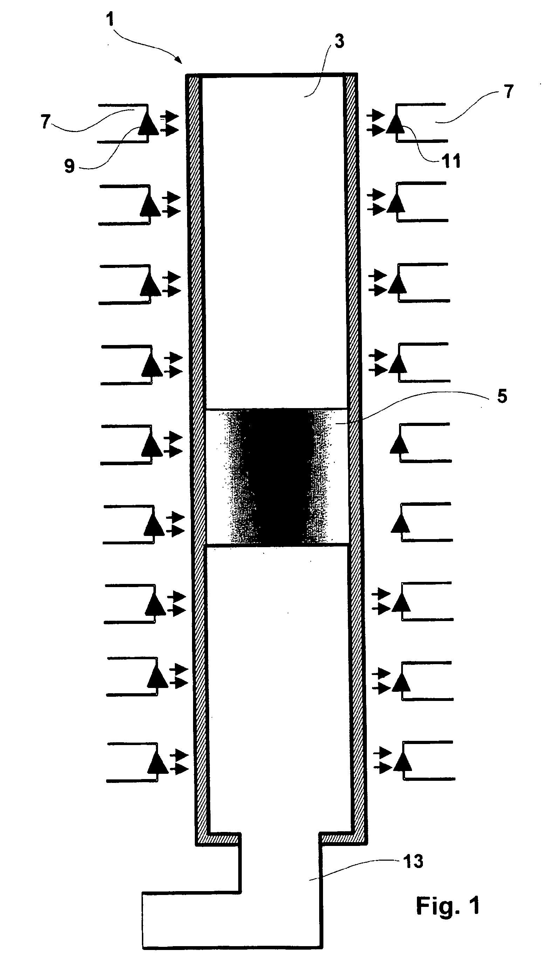

Weitere Einzelheiten, Merkmale und Vorteile der Erfindung ergeben sich aus der nachfolgenden Beschreibung unter Bezugnahme auf die Zeichnungen. Darin zeigen
- Fig. 1: eine schematische Darstellung der Meßvorrichtung zum Erfassen des Flüs- sigkeitsstandes in einem Behälter, insbesondere in einem Laugenbehälter einer Wasch- oder Geschirrspülmaschine (nicht dargestellt). Fig. 1 zeigt le- diglich den prinzipiellen Aufbau einer Meßvorrichtung, die über das Prinzip der kommunizierenden Röhren mit dem Laugenbehälter des Haushaltgeräts verbunden ist. Weiterhin sind die Lichtschrankenanordnungen, die nach dem Durchlichtprinzip arbeiten, gezeigt, wobei die Lichtsendevorrichtungen und die Lichtempfangsvorrichtungen an den zwei gegenüberliegenden Seiten der Meßvorrichtung dargestellt sind;
- Fig. 2: eine vergleichbare schematische Meßvorrichtung wie in Fig. 1, wobei die Lichtschrankenanordnungen in dieser gezeigten Ausführungsform als Re- flexlichtschrankenanordnungen ausgebildet sind, die sowohl als Lichtsende- als auch als Lichtempfangsvorrichtung dienen;
- Fig. 3: eine erfindungsgemäße Meßvorrichtung mit einem oberen und einem unte- ren Schwimmerabschnitt, die durch einen Abstandshalter miteinander ver- bunden sind. Der Schwimmer befindet sich in der Darstellung in der maxima- len Füllhöhe des Flüssigkeitsstandes.

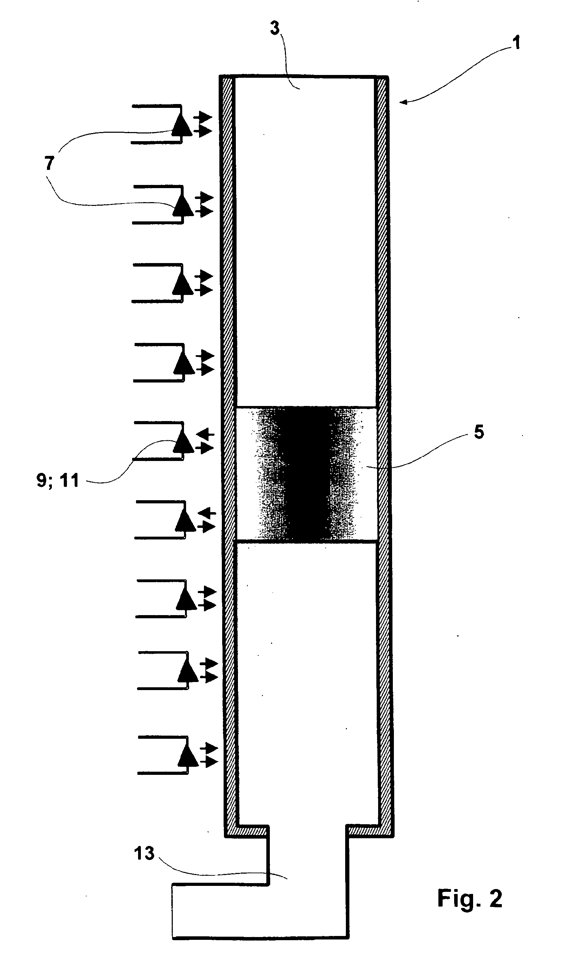

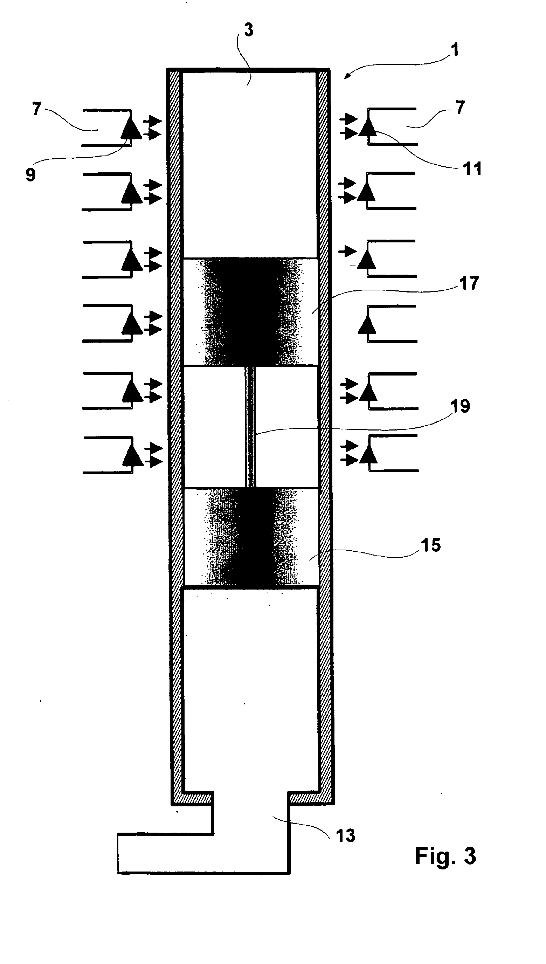

Die in den Figuren 1 und 2 dargestellten Ausführungsformen sind nicht Bestandteil der Erfindung. Sie dienen lediglich der Erläuterung der in Figur 3 gezeigten Ausführungsform. In den Zeichnungen sind gleiche Teile mit denselben Bezugsziffern bezeichnet.

Die Meßvorrichtung 1 (Fig. 1) ist mit einem vertikal angeordneten Meßrohr 3 als kommunizierendes Röhrensystem beispielsweise mit dem nicht dargestellten Laugenbehälter einer Wasch- oder Geschirrspülmaschine verbunden. Das Meßrohr 3 ist aus einem lichtdurchlässigen Material beispielsweise aus Glas oder durchsichtigem Kunststoff ausgebildet. In diesem Meßrohr 3 ist ein Schwimmer 5 angeordnet. Nach dem Prinzip der kommunizierenden Röhren weist der Flüssigkeitsstand in dem nicht dargestellten Laugenbehälter der Wasch- oder Geschirrspülmaschine dasselbe Niveau auf wie das Meßrohr 3, so daß sich der Schwimmer 5 auf dem diesem Flüssigkeitsstand entsprechenden Niveau befindet. Das Meßrohr 3 wird in einer Höhenposition angeordnet, die geeignet ist, den zu überwachenden Flüssigkeitsstand bzw. den maximal zulässigen Flüssigkeitsstand in dem nicht dargestellten Laugenbehälter zu überwachen.

Am Meßrohr 3 sind Lichtschrankenanordnungen 7 ausgebildet, die jeweils eine Lichtsendevorrichtung 9 und eine Lichtempfangsvorrichtung 11 aufweisen. Diese Lichtschrankenanordnungen sind nach dem Durchlichtprinzip ausgebildet und übereinander höhenbeabstandet angeordnet. Sie weisen einen konstanten Höhenabstand voneinander auf.

Fig. 2 zeigt eine alternative Ausführungsform der Meßvorrichtung 1, in der die Lichtschrankenanordnungen 7 nach dem Reflexionsprinzip ausgebildet sind und die Lichtsendevorrichtung 9 sowie die Lichtempfangsvorrichtung 11 zusammen nur auf einer Seite des Meßrohres 3 angeordnet sind.

Die Waschflüssigkeit 13 gelangt über das kommunizierende Röhrensystem aus dem nicht dargestellten Laugenbehälter des Haushaltgeräts in das Meßrohr 3 der Meßvorrichtung 1. Bei steigendem Flüssigkeitsstand im nicht dargestellten Laugenbehälter steigt auch der Flüssigkeitsstand im Meßrohr 3 der Meßvorrichtung 1. Dabei wird der Schwimmer 5 aus seiner tiefsten Stellung mit steigendem Flüssigkeitsstand nach oben bewegt. Dabei passiert der Schwimmer 5 eine der Lichtschrankenanordnungen 7 und verhindert aufgrund seiner Ausbildung aus einem nicht transparenten Material an derjenigen Lichtschrankenanordnung 7, an der er sich vorbeibewegt, den Lichtdurchtritt von der Lichtsendevorrichtung 9 zur Lichtempfangsvorrichtung 11.

Der Schwimmer 5 weist eine Höhe auf, die etwa dem eineinhalbfachen Höhenabstand der Lichtschrankenanordnungen 7 entspricht, wodurch es möglich ist, die doppelte Anzahl von Füllstandshöhen der Waschflüssigkeit 13 gegenüber der Anzahl der Lichtschrankenanordnungen 7 nachzuweisen.

In einer alternativen Ausführungsform der Meßvorrichtung 1, die nach dem Reflexionsprinzip arbeitet, reflektiert der Schwimmer 5 bei seiner Bewegung innerhalb des Meßrohres 3 nach oben das von der Lichtsendevorrichtung 9 ausgesandte Licht zurück zur Lichtempfangsvorrichtung 11, da eine Einrichtung zur Reflexion der Lichtstrahlen am Schwimmer 5 ausgebildet ist. Die Höhe des Schwimmers 5 entspricht wieder im wesentlichen dem Eineinhalbfachen des Höhenabstandes der Lichtschrankenanordnungen 7.

In Fig. 3 ist eine besonders bevorzugte Ausführungsform der erfindungsgemäßen Meßvorrichtung 1 dargestellt. In dieser Ausführungsform weist der Schwimmer 5 einen unteren Schwimmerabschnitt 15 und einen oberen Schwimmerabschnitt 17 auf, die miteinander durch einen Abstandshalter 19 verbunden sind. In Fig. 3 sind die Stellungen des unteren und oberen Schwimmerabschnitts 15 und 17 dargestellt, die der maximalen Füllhöhe des Flüssigkeitsstandes im nicht dargestellten Laugenbehälter des Haushaltgeräts und über das Prinzip der kommunizierenden Röhren auch der maximalen Füllhöhe des Meßrohres 3 der Meßvorrichtung 1 entspricht. In Fig. 3 sind die Lichtschrankenanordnungen 7 nach dem Durchlichtprinzip dargestellt, wobei Licht aus der Lichtsendevorrichtung 9 ausgesendet und von der Lichtempfangsvorrichtung 11 aufgenommen wird.

Alternativ dazu, jedoch nicht dargestellt, kann diese besonders bevorzugte Ausführungsform auch das Prinzip der Lichtreflexion, wie anhand von Fig. 2 erläutert, aufweisen. Bei steigender Waschflüssigkeit 13 gelangen der untere Schwimmerabschnitt 15 und der über den Abstandshalter 19 verbundene obere Schwimmerabschnitt 17 nach oben und passieren dabei die Lichtschrankenanordnungen 7. Das aus der Lichtsendevorrichtung 9 austretende Licht muß bei dieser besonders bevorzugten Ausführungsform nicht die Waschflüssigkeit 13 durchstrahlen, um von der Lichtempfangsvorrichtung 11 aufgenommen zu werden, sondern der Durchtritt des Lichts erfolgt im Bereich des Abstandshalters 19, der nicht mit der Waschflüssigkeit 13 in Kontakt tritt. Dadurch wird vor allem sichergestellt, daß die Lichtschrankenanordnungen 7 auch nach längerem Gebrauch der Meßvorrichtung 1 innerhalb des Haushaltgerätes nicht durch Verschmutzungen, die in der Waschflüssigkeit 13 enthalten sind, in ihrer Funktion beeinträchtigt werden.

## Patentansprüche

1. Behälter mit einer Vorrichtung zum Erfassen des Flüssigkeitsstandes in dem Behälter, insbesondere in einem Laugenbehälter einer Wasch- oder Geschirrspülmaschine, mit einem transparenten Meßrohr (3), das als kommunizierendes System mit dem Behälter verbunden ist und in einer Höhenposition angeordnet ist, der geeignet ist, den zu überwachenden Flüssigkeitsstand bzw. den maximalen Flüssigkeitsstand in dem Behälter zu überwachen, mit einem eine Höhe aufweisenden Schwimmer (5), der in der Lage ist Lichtstrahlen zu unterbrechen, und mit einer Mehrzahl von optoelektronlschen Einrichtungen, die als Lichtschrankenanordnungen (7) ausgebildet und jeweils mit einem voneinander konstanten Höhenabstand übereinanderliegend höhenbeabstandet angeordnet sind, **dadurch gekennzeichnet, daß** der Schwimmer (5) einer oberen Schwimmerabschnitt (17), der in der Lage ist Lichtstrahlen zu unterbrechen, und einen unteren Schwimmerabschnitt (15) aufweist, wobei die Abschnitte durch wenigstens einen Abstandshalter (19), in dessen Bereich von der Lichtschrankenanordnung (7) ausgesendetes Licht durchtreten kann, miteinander verbunden sind, die Höhe des oberen Schwimmerabschnitts (17) etwa dem eineinhalbfachen konstanten Höhenabstand der Lichtschrankenanordnungen (7) entspricht und die Lichtschrankenanordnungen (7) oberhalb der maximal erreichbaren Höhe des unteren Schwimmerabschnitts (15) vorgesehen Ist, wobei die maximal erreichbare Höhe des unteren Schwimmerabschnitts (15) durch den maximalen Flüssigkeitsstand in dem System bedingt ist.

2. Behälter nach Anspruch 1, **dadurch gekennzeichnet, daß** die optoelektronischen Einrichtungen gepulste Injektionslumineszensdioden sind.

3. Behälter nach Anspruch 1 oder 2, **dadurch gekennzeichnet, daß** die Lichtschrankenanordnungen (7) als Durchlicht-Lichtschrankenanordnungen ausgebildet ist.

4. Behälter nach Anspruch 1 oder 2, **dadurch gekennzeichnet, daß** die Lichtschrankenanordnungen (7) als Reflex-Lichtschrankenanordnungen ausgebildet ist.

5. Behälter nach Anspruch 4, **dadurch gekennzeichnet, daß** eine Einrichtung zur Reflexion der Lichtstrahlen am Schwimmer (5) ausgebildet ist.

6. Behälter nach einem der Ansprüche 1 bis 5, **dadurch gekennzeichnet, daß** der Schwimmer (5) aus einem wärmeunempfindlichen Material ausgebildet ist.

7. Behälter nach einem der Ansprüche 1 bis 6, **dadurch gekennzeichnet, daß** der Schwimmer (5) als Hohlzylinder ausgebildet ist.

8. Behälter nach einem der Ansprüche 1 bis 7, **dadurch gekennzeichnet, daß** der wenigstens eine Abstandshalter (19) aus einem transparenten Material ausgebildet ist.

## Claims

1. Container with a device for detecting the liquid state in the container, particularly in a solution container, of a washing machine or dishwasher, with a transparent measuring pipe (3) which as a communicating system is connected with the container and is arranged at a height position suitable for monitoring the liquid state which is to be monitored or the maximum liquid state in the container, with a float (5) which has a height and which is in the position of interrupting light beams, and with a plurality of optoelectronic devices, which are constructed as light barrier arrangements (7) and are respectively arranged at a height spacing one above the other with a constant height distance from one another, **characterised in that** the float (5) has an upper float section (17) which is in a position of interrupting light beams and a lower float section (15), wherein the sections are connected together by at least one spacer (19), in the region of which light emitted by the light barrier arrangement (7) can pass through, the height of the upper float section (17) approximately corresponds with one-and-a-half times the constant height spacing of the light barrier arrangements (7) and the light barrier arrangements (7) are provided above the maximum attainable height of the lower float section (15), wherein the maximum attainable height of the lower float section (15) is constrained by the maximum liquid state in the system.

2. Container according to claim 1, **characterised in that** the optoelectronic devices are pulsed injection luminescent diodes.

3. Container according to claim 1 or 2, **characterised in that** the light barrier arrangements (7) are constructed as transmitted-light light barrier arrangements.

4. Container according to claim 1 or 2, **characterised in that** the light barrier arrangements (7) are constructed as reflex light barrier arrangements.

5. Container according to claim 4, **characterised in that** a device for reflection of the light beams is formed at the float (5).

6. Container according to any one of claims 1 to 5, **characterised in that** the float (5) is constructed from heat-insensitive material.

7. Container according to any one of claims 1 to 6, **characterised in that** the float (5) is constructed as a hollow cylinder.

8. Container according to any one of claims 1 to 7, **characterised in that** the at least one spacer (19) is constructed from a transparent material.

## Revendications

1. Réservoir comprenant un dispositif de détection du niveau de liquide dans le réservoir, notamment dans un réservoir de lessive d'un lave-linge ou lave-vaisselle, comprenant un tube de mesure transparent (3) qui est raccordé au réservoir en tant que système communiquant et est disposé dans une position en hauteur, qui est apte à surveiller le niveau de liquide à surveiller resp. le niveau de liquide maximal dans le réservoir, comprenant un flotteur (5) présentant une hauteur, lequel est en mesure d'interrompre des rayons lumineux, et comprenant une pluralité de dispositifs optoélectroniques qui sont réalisés en tant que dispositifs de barrières photoélectriques (7) et sont respectivement disposés de manière superposée en étant distants les uns des autres en hauteur, avec un écart en hauteur constant l'un par rapport à l'autre, **caractérisé en ce que** le flotteur (5) présente une section de flotteur supérieure (17), qui est apte à interrompre les rayons lumineux, et une section de flotteur inférieure (15), les sections étant raccordées entre elles par au moins une pièce d'écartement (19) dans la partie de laquelle peut passer la lumière émise par le dispositif de barrière photoélectrique (7), la hauteur de la section de flotteur supérieure (17) correspondant à environ une fois et demi l'écart en hauteur des dispositifs de barrières photoélectriques (7) et les dispositifs de barrières photoélectriques (7) étant ménagés au-dessus de la hauteur maximale pouvant être atteinte de la section de flotteur inférieure (15), la hauteur maximale pouvant être atteinte de la section de flotteur inférieure (15) étant dépendante du niveau de liquide maximal dans le système.

2. Réservoir selon la revendication 1, **caractérisé en ce que** les dispositifs optoélectroniques sont des diodes luminescentes pulsées.

3. Réservoir selon la revendication 1 ou 2, **caractérisé en ce que** les dispositifs de barrières photoélectriques (7) sont réalisés en tant que dispositifs de barrières photoélectriques à lumière transmise.

4. Réservoir selon la revendication 1 ou 2, **caractérisé en ce que** les dispositifs de barrières photoélectriques (7) sont réalisés en tant que dispositifs de barrières photoélectriques à réflexion.

5. Réservoir selon la revendication 4, **caractérisé en ce qu'**un dispositif de réflexion des rayons lumineux est réalisé sur le flotteur (5).

6. Réservoir selon l'une quelconque des revendications 1 à 5, **caractérisé en ce que** le flotteur (5) est réalisé dans une matière insensible à la chaleur.

7. Réservoir selon l'une quelconque des revendications 1 à 6, **caractérisé en ce que** le flotteur (5) est réalisé en tant que cylindre creux.

8. Réservoir selon l'une quelconque des revendications 1 à 7, **caractérisé en ce que** l'au moins une pièce d'écartement (19) est réalisée dans une matière transparente.
